# EUROPÄISCHE PATENTANMELDUNG

(11) **EP 0 973 320 A1**
(43) Veröffentlichungstag der Anmeldung: **19.01.2000**
(21) Anmeldenummer: 99110744.2
(22) Anmeldetag: 04.06.1999
(51) Int. Cl.: H04M 17/02

(54) **Öffentliches Fernsprechsystem**

(30) Priorität: 11.07.1998 DE 19831171
(71) Anmelder: Deutsche Telekom AG, 53113 Bonn (DE)
(72) Erfinder: Hertzel, Silvio, 53639 Königswinter (DE); Wagner, Robert, 53343 Wachtberg (DE); Perini, Roland, 53424 Remagen (DE)

(57) **Zusammenfassung**

Die Erfindung betrifft ein öffentliches Fernsprechsystem und insbesondere eine darin verwendbare Telefonstelle.

Ein Problem bei solchen, der Öffentlichkeit ungesichert zugänglichen Telefonstellen ist jedoch, daß sie häufig das Ziel vandalistischer Zerstörung sind. Der am meisten der Zerstörung ausgelieferte Teil des Telefons ist der frei zugängliche Telefonhörer und seine Anschlußschnur, die von dem übrigen Apparateteil abgerissen oder durchtrennt werden.

Diese Nachteile vermeidet die Erfindung durch den Einsatz einer Telefonstelle, die im wesentlichen eine Freisprecheinrichtung (4,5;Fig.1), ein Anzeigefeld (6) zur Kontrolle der Eingabe und ggf. Anzeige von Meldungen der Telefoneinheit, eine Eingabeeinichtung für Münzen, Geldscheine und/oder Karten zum Entgelten kostenpflichtiger Leistungen verfügt, sowie eine kontaktgesteuerte Schalteranordnung (8) aufweist, die beim Betreten der Telefonstelle automatisch die Freisprecheinrichtung aktiviert.

## Beschreibung

Die Erfindung bezieht sich auf ein öffentliches Fernsprechsystem mit einer in einer Telefonzelle oder an einer Wand in oder an einem Gebäude angebrachten und gegen Beschädigung und Zerstörung besonders geschützten öffentlichen Telefonstelle, wie beispielsweise ein Münz-oder Kartentelefon, das mit seitlichen Abschirmwänden gegen Nebengeräusche und unerwünschtes Mithören oder Einsichtnahme auf die Tastatur zum Schutze der PIN (PIN=persönliche Identifizierungsnummer) abgeschirmt ist, auf ein Verfahren zu deren Betrieb sowie eine Telefonstelle.

Der bekannte Aufbau einer öffentlichen Telefonstelle, zum Beispiel einer Telefonzelle, besteht aus einem in einer geschlossenen Zelle, auch populär als Telefonhäuschen bezeichnet, angebrachten Telefonapparat mit Nummernscheibe oder Tastatur zur Eingabe der zu wählenden Telefonnummer, mit einer Münzeinwurf und -Prüfeinrichtung und/oder einer Telefonkarteneinrichtung zur Entrichtung der Gesprächsgebühr. Seitlich an dem Apparategehäuse, meist auf der linken Seite, befindet sich auf einem Hakenumschalter hängend oder auf einer ähnlich gestalteten Aufnahme mit Umschaltkontakt der Telefonhörer, der mit dem Apparat mittels einer Anschlußschnur verbunden ist.

Das Problem bei solchen, der Öffentlichkeit ungesichert zugänglichen Telefonen ist jedoch, daß sie häufig das Ziel vandalistischer Zerstörung sind, wobei die technischen Einrichtungen zerstört, unbrauchbar gemacht und/oder stark verunreinigt werden. Der am meisten der Zerstörung ausgelieferte Teil des Telefons ist der frei zugängliche Telefonhörer und seine Anschlußschnur, die von dem übrigen Apparateteil abgerissen oder durchtrennt werden. Dadurch wird die öffentliche Sprechstelle für eine bestimmungsgemäße Benutzung unbrauchbar.

Diese aus Kostengründen und Gründen der öffentlichen Sicherheit, da im Bedarfsfall dringende Notrufe nicht mehr abgesetzt werden können, nicht hinnehmbare Zerstörung ist ein großer Nachteil, dem öffentliche Sprechstellen unterliegen. Darüber hinaus ist auch der Umgang mit einem Telefonhörer einer öffentlichen Sprechstelle vom hygienischen Standpunkt aus nicht unproblematisch.

Ferner sind Freisprecheinrichtungen an sich bekannt, die zum Telefonieren keinen in der Hand zu haltenden Telefonhörer mit Anschlußschnur mehr benötigen und hauptsächlich im Rahmen der mobilen Telekommunikation verwendet werden. Diese Freisprecheinrichtungen sind auf Grund ihrer besonderen Schaltungstechnik auch relativ unempfindlich gegen störende Umgebungsgeräusche.

Auch Einrichtungen und Schaltungsanordnungen zur Erkennung und Identifizierung von Sprache und Personen anhand ihrer Stimmen sind an sich bekannt und werden in zunehmendem Maße eingesetzt, um Kommandos und Befehle an Steuervorrichtungen zu geben, wo die Hände für die Durchführung anderer Aufgaben frei bleiben oder vor Verletzungen geschützt werden müssen. Auch für die Identifizierung von Personen bei der Zugangskontrolle für die Prüfung der Zugangsberechtigung werden derartige Einrichtungen verwendet.

Alle diese bekannten Einrichtungen sind für sich genommen nicht in der Lage, öffentliche Telefonstellen gegen Vandalismus zu schützen.

Das Problem von Telefonstellen der eingangs aufgeführten Art ist jedoch erfindungsgemäß dadurch zu lösen, daß diese so gestaltet werden, daß sie keine Einrichtungen mehr erkennen lassen, die nicht unmittelbar zur sinnvollen Abwicklung eines Telefonates dienen. Der Grund hierfür besteht darin, daß Einrichtungen, die an sich nicht als für eine relativ einfache Zerstörung geeignet erkennbar sind, auch keinen Anreiz zur Beschädigung mehr bieten.

Es ist daher die Aufgabe der vorliegenden Erfindung hier Abhilfe zu schaffen und eine Lösung für öffentliche Telefonstellen anzugeben, durch welche diese vorwiegend gegen Vandalismus geschützt werden, wobei auch aus Sicht der Hygiene beim Umgang mit Telefonhörern Verbesserungen vorzunehmen sind.

Es wird gemäß Anspruch 1 ein öffentliches Fernsprechsystem mit in einer Telefonzelle oder an einer Wand in oder an einem Gebäude angebrachten und gegen Beschädigung und Zerstörung besonders geschützen Telefonstelle angegeben, die eine Telefoneinheit, die über eine Freisprecheinrichtung verfügt sowie eine kontaktgesteuerte Schalteranordnung (8) aufweist, die beim Betreten der Telefonstelle automatisch die Telefoneinheit aktiviert.

Weitere Ausgestaltungen und Weiterbildungen des öffentlichen Fernsprechsystems sind den Unteransprüchen zu entnehmen.

Der Betriebsablauf des öffentlichen Fernsprechsystems umfaßt folgende Ablaufschritte:
Beim Betreten der Telefonstelle durch einen Fernsprechteilnehmer wird mittels einer Schalteranordnung die Telefoneinheit und ggf. eine Beleuchtung eingeschaltet und eine Verbindung zu einer freien automatischen Vermittlungsstelle hergestellt. Es erfolgt eine Begrüßungsansage sowie eine Durchsage des Menüs aller ausführbaren Funktionen. Der Teilnehmer wird aufgefordert, seinen Funktionswunsch durchzusagen. Wünscht er eine kostenpflichtige Leistung, wird er aufgefordert, beispielsweise seine Kreditkartennummer mitzuteilen. Alternativ kann er die gewünschte Zahlungsart bar oder mit Karte angeben und im Falle der Zahlung mittels Karte seine Karte in die Kartenaufnahme stecken sowie seine PIN eingeben. Im Falle der Barzahlung wird er aufgefordert, geeignete Münzen oder Geldscheine bereit zu halten. Bei einer nicht kostenpflichtigen Leistung sowie bei Barzahlung werden die folgenden Schritte übersprungen:
a) Der automatische Vermittlungsplatz prüft Karte und PIN.
b) Wenn Karte und/oder PIN nicht korrekt sind, teilt er dies dem Teilnehmer mit und bittet ggf. um eine erneute Eingabe.
c) Stellt der automatische Vermittlungsplatz nach einer vorgegeben Anzahl von Wiederholungen keine korrekte Eingabe fest, wird die Verbindung getrennt.

Sind Karte und PIN korrekt bzw. Barzahlung gewählt, dann fordert der automatische Vermittlungsplatz den Teilnehmer auf, die Rufnummer des gewünschten Teilnehmers oder Dienstes einzugeben. Kennt der Teilnehmer die Rufnummer, dann gibt er sie durch. Kennt er sie nicht, wird er aufgefordert, Namen und ggf. Adresse bzw. die Bezeichnung des Dienstes (Kinoprogramm, Zeitansage) anzugeben. Die automatische Vermittlungsstelle sucht in einer entsprechenden Datenbank die Rufnummer, ermittelt den kostenpflichtigen Betrag, sagt ihn durch und/oder zeigt ihn im Anzeigefeld an.
Im Falle der Barzahlung fordert sie den Betrag an und prüft den Zahlungseingang. Ist er nicht korrekt, erfolgt eine neue Zahlungsaufforderung, die ggf. mehrmals wiederholt wird. Geht keine korrekte Zahlung ein, wird die Verbindung getrennt.
Nach korrekter Zahlung wird die Verbindung hergestellt.
Im Falle der gewählten Barzahlung wird die anfallende Gebühr laufend ermittelt und der Teilnehmer gebeten diese zu entrichten. Ist der entrichtete Betrag verbraucht, wird die Verbindung getrennt.
Die Verbindung wird an Ihrem Ende durch eine Mitteilung des Teilnehmers an die automatische Sprechstelle beendet. Diese gibt die Gesamtkosten der Verbindung durch Durchsage und/oder Anzeige im Anzeigefeld an und nimmt im Falle der Zahlung durch Karte die Abbuchung von derselben vor. Die Verbindung wird danach getrennt.

Es ergibt sich durch die Erfindung somit der Vorteil, daß bei voller Sprechstellenidentifikation und Prüfung der Benutzungsberechtigung eines potentiellen Teilnehmers einer öffentlichen Telefonstelle, die Zerstörungs- und Beschmutzungsgefahr deutlich verringert und die Hygiene und die Sprachverständlichkeit gegenüber herkömmlichen Telefonzellen verbessert ist.

Im folgenden wird die Erfindung anhand der beiliegenden Zeichnung näher beschrieben.

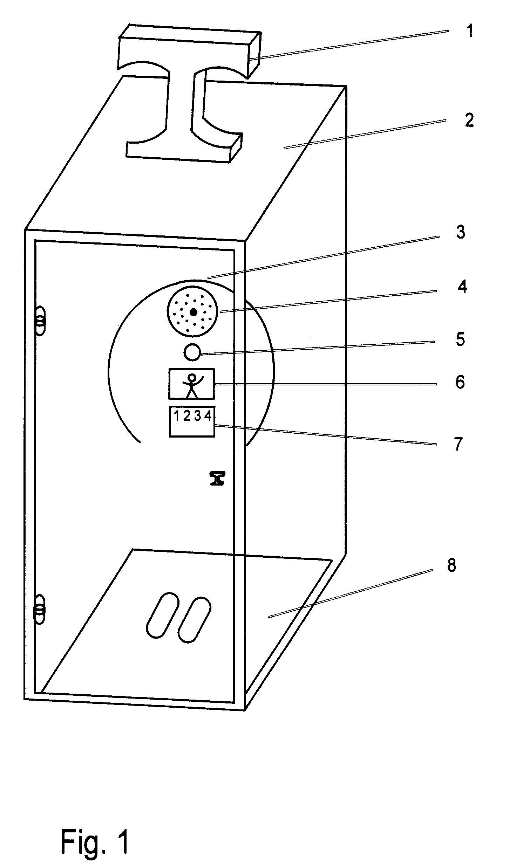

Figur 1 zeigt eine schematische, perspektivische Darstellung der erfindungsgemäßen Telefonzelle.

Sie besteht zunächst aus einem stabilen Häuschen oder Zelle 2 aus Stahl, Eisen, Aluminium oder auch aus Kunstoff oder, voll- oder teilverglast, oder alternativ nur mit einer Glastür versehen, um eine Rundum-Einsicht zu vermeiden. Auf dem Dach der Telefonzelle ist ein leuchtendes und sich ggf. drehendes Telefonsymbol 1, beispielsweise ein "T" oder das Logo der deutschen Telekom AG angebracht, damit die Telefonzelle schon von weitem und auch bei Dunkelheit als solche zu identifizieren und leicht zu finden ist.

An einer der Wände, vorzugsweise an der Rückwand der Telefonzelle, ist die Telefoneinheit 4,5,6,7 angebracht. Sie kann auch mit einer Wand abschließend angebracht sein, wenn diese um mindestens die Breite der Telefoneinheit vorgebaut ist. Diese letztgenannte Einbauweise hat den Vorteil, daß sie einen noch besseren Schutz gegen Beschädigung bietet.

Um die Telefoneinheit herum kann auch eine Haube 3 als weitere Sichtblende und zur Verbesserung der Akustik in der Telefonzelle selbst angebracht sein.

Die eigentliche Telefoneinheit besteht, wie Figur 1 zeigt, aus einem Lautsprecher 4, einem Mikrofon 5, einem Anzeigefeld 6 nach Art eines an sich bekannten Displays, beispielsweise einer Flüssigkristallanzeige, sowie einem Tastenfeld 7, die alle mehr oder weniger bündig mit der Vorderseite der Telefoneinheit abschließen. Das relativ empfingliche Anzeigefeld kann zu seinem Schutze auch hinter einer kleinen Panzerglasscheibe angebracht sein.

Der Lautsprecher 4 und das Mikrofon 5 sind Bestandteile einer Freisprecheinrichtung, die einen an einer Telefonschnur befestigten Telefonhörer überflüssig macht und der somit auch nicht beschädigt oder zerstört werden kann.
Eine derartige Freisprecheinrichtung in einer Telefonzelle hat ferner den Vorteil, daß auch noch ein bis zwei Begleitpersonen, die sich auch noch in der Zelle befinden können, am Gespräch teilnehmen können, was bei herkömmlichen Telefonzellen nicht möglich ist.

Zur Eingabe von alpha-numerischen Zeichen und Sonderzeichen ist das Tastenfeld 7 für Nummernwahl, PIN und sonstige Steuerzeichen vorgesehen.

Eine Besonderheit dieser Telefoneinheit besteht jedoch darin, daß auch alternativ oder ausschließlich Sprache als Eingabemedium verwendet werden kann. Im letzteren Fall erübrigt sich das Tastenfeld 7. Hierzu sind in der Telefonstelle und/oder einer automatischen Vermittlungsstelle, mit der die Telefonzelle verbunden ist, Einrichtungen zur Spracherkennung und Steuerung durch die Sprache vorgesehen, die ebenfalls an sich bekannt sind. Für Spezialzwecke der Identitäts- und Authentizitätsprüfung können auch Stimmenanalysatoren vorgesehen werden, welche vorher festgelegte und vorherbestimmte Personen erkennen und eine entsprechende Funktionsfreigabe für diese Personen bewirken.

Da die Einrichtungen zur Spracherkennung, -Steuerung und - Erzeugung sowohl im Netz als auch in der Telefonzelle untergebracht sein können, eignet sich die Anordnung und die noch im folgenden zu erläuternde Verfahrensweise für deren Betriebsablauf auch für einen internationalen Einsatz.
Denkbar ist beispielsweise der Einsatz solcher Telefonzellen auf internationalen Flughäfen, z.B. in der Nähe der Schalter der verschiedenen Fluglinien.

Um festzustellen, ob die Telefonzelle von mindestens einer Person betreten wird, ist in der Bodenplatte eine Kontaktvorrichtung eingebaut, die in der Telefoneinheit eine Schalteranordnung 8 betätigt. Diese Kontaktvorrichtung kann eine Federkontaktanordnung sein, oder es kann an ihrer Stelle in Bodennähe eine berührungslose und daher wartungsarme fotoelektrische Sensoranordnung angebracht sein.

Die Telefonzelle und ggf. weitere typgleiche Telefonzellen sind jeweils über eine Anschlußleitung mit der zugeordneten Vermittlungsstelle verbunden. Die Anschlußleitung wird zum Hauptverteiler geführt, wo alle eingehenden Teilnehmer-Anschlussleitungen einer Vermittlungsstelle auflaufen. Von hier werden sie auf eine besondere Gruppe von automatischen Vermittlungsplätzen aufgeschaltet, die über die notwendigen Einrichtungen zur Spracherkennung, -Steuerung und -Erzeugung sowie ggf. zur Stimmenidentifizierung verfügen.

Die schaltungstechnische Aufteilung der technischen Einrichtungen kann so erfolgen, daß die Freisprecheinrichtungen in der jeweiligen Telefoneinheit und die relativ komplexen und aufwendigen Einrichtungen zur Spracherkennung und -Steuerung, sowie zur Erzeugung der Sprache für den Dialog mit dem Telefonkunden in der Zelle in dem automatischen Vermittlungsplatz untergebracht sind.

Die relativ komplexen Einrichtungen können auch in der Vermittlungsstelle zentral untergebracht sein, wo sich mehrere Vermittlungsplätze diese Einrichtungen teilen. Es ist aber auch möglich, alle diese Einrichtungen in der Telefoneinheit in der Zelle unterzubringen. Dann werden die Anschlußleitungen zur Vermittlungsstelle wie ganz normale Telefonleitungen weitergeführt.

Beim Betreten der Telefonzelle wird durch die Schaltervorrichtung 8 die Telefoneinheit, sowie bei Dunkelheit ggf. eine Beleuchtung im Inneren der Telefonzelle eingeschaltet und ihre Verbindung mit der besonderen Gruppe von automatischen Vermittlungsplätzen in der Vermittlungsstelle hergestellt. Dieses kann durch ein Anrufsuchersystem der besonderen Gruppe geschehen, das die Telefonzelle mit einem freien automatischen Vermittlungsplatz verbindet, oder durch eine fest in der Telefoneinheit eingespeicherte Nummer erfolgen, die beim Betreten der Telefonzelle gewählt wird und direkt den zugeordneten automatischen Vermittlungsplatz anwählt.

Der Telefonkunde in der Zelle wird nun von einer synthetisch erzeugten oder vorher abgespeicherten natürlichen Stimme begrüßt, wobei der sich nun entwickelnde Dialog mit dem automatischen Vermittlungsplatz auch in anderen Sprachen erfolgen kann, wenn erst einmal die vom Telefonkunden benutzte Sprache erkannt worden ist. Außerdem kann durch Verwendung eines automatischen Sprachübersetzers in der Vermittlungsstelle nach der Sprachidentifizierung zweier Teilnehmer, die nicht die gleiche Sprache sprechen, jeder der Teilnehmer in seiner Sprache mit dem anderen kommunizieren.

Die Stimme führt den Telefonkunden durch ein sprachgesteuertes Menü. Die Verrechnung des Entgelts für kostenpflichtige Leistungen erfolgt vorzugsweise über Karten, wie z.B. T-Card, Krediditkarte, Geldkarte o.dgl. Eine Kundenidentifizierung und Feststellung seiner Berechtigung mit der Karte zu zahlen erfolgt durch Eingabe von Ziffern und seiner PIN. Sollte die Telefoneinheit auch noch über eine Münz- und Geldscheineingabeb verfügen, erfolgt die Zahlung durch die Eingabe von Geldmünzen oder Geldscheinen. Die Eingaben können tastaturgesteuert oder sprachgesteuert über das eingebaute Mikrofon erfolgen. Bei ausschließlicher Sprachsteuerung kann auch die Tastatur 7 entfallen, sodaß sich auch hier eine höhere Zuverlässigkeit der Benutzung wegen geringerer Störanfälligkeit und Zerstörungsmöglichkeiten ergibt. Zur Kontrolle der Eingaben können diese auf dem Anzeigefeld 6 sichtbar gemacht werden.

Soll die Telefonzelle auch für Bildtelefonie verwendet werden können, dann wird in die Telefoneiheit auch noch eine Bildwandlerkamera bekannter Bauart eingebaut, deren Lichtempfindlichkeitsbereich dem in der Telefonzelle auftretenden Helligkeitsbereich angepaßt ist.

Der Telefonkunde oder Teilnehmer in der Zelle wird vom angewählten automatischen Vermittlungsplatz nach seinem Wunsch gefragt. Wenn der Kunde kostenpflichtige Leistungen nutzen möchte, wird er aufgefordert, seine Karte in die Kartenaufnahme einzustecken und sich mit seiner PIN zu identifizieren.

Möchte der Kunde eine Telefonverbindung zu einem anderen Fernsprechteilnehmer, dann kann er dem automatischen Vermittlungsplatz dessen Telefonnummer über die Tastatur oder über das Mikrofon mitteilen, wenn er die Rufnummer kennt. Kennt er die Rufnummer nicht, dann sucht der automatische Vermittlungsplatz die Nummer auf Grund des Namens und/oder der Anschrift des gewünschten Fernsprechteilnehmers in entsprechenden Datenbanken und stellt die Verbindung her.

Wenn der Kunde eine Information aus dem vielfältigen Angebot der Telefongesellschaft, z.B. der deutschen Telekom AG, wünscht, beispielsweise einen Wetterbericht, ein Kochrezept oder die neuesten Sportergebnisse oder -Veranstaltungen, dann baut der automatische Vermittlungsplatz eine Verbindung zur Quelle der Information auf und gibt die Information an den Telefonkunden weiter.

Nach Beendigung des Telefonates verläßt der Kunde wieder die Telefonzelle, was von der eingebauten Schalteranordnung 8 festgestellt wird. Durch die Betätigung der Schalteranordnung wird die Verbindung mit dem automatischen Vermittlungsplatz beendet. Sollte die Schalteranordnung einmal versagen, dann wird die Verbindung der Telefonzelle mit dem automatischen Vermittlungsplatz nach Ablauf einer fest eingestellten Zeit von der Vermittlungsstelle beendet und in dieser ein Fehlerindikator für das Wartungspersonal gesetzt.

## Patentansprüche

1. Öffentliches Fernsprechsystem mit
wenigstens einer, jeweils in einer Telefonzelle oder an einer Wand in oder an einem Gebäude angebrachten Telefonstelle, die mit einer zugeordneten Vermittlungsstelle verbunden ist,
dadurch gekennzeichnet, daß
die Telefonstelle folgende Merkmale umfaßt:
- eine Telefoneinheit (4- 7;Fig.1), die über eine Freisprecheinrichtung (4,5;Fig.1) verfügt, sowie
- eine kontaktgesteuerte Schalteranordnung (8), die beim Betreten der Telefonstelle automatisch die Telefoneinheit aktiviert.

2. System nach Anspruch 1, dadurch gekennzeichnet, daß jede Vermittlungsstelle mit einer oder mehreren automatischen Vermittlungsplätzen verbindbar ist, und daß Einrichtungen zur Spracherkennung, -Steuerung und - Erzeugung in der Telefoneinheit jeder Telefonstelle und/oder in den automatischen Vermittlungsplätzen installiert sind und beim Ansprechen der Schalteranordnung (8) einer Telefonstelle mit dieser nach Art eines Anrufsuchersystems verbindbar sind, wobei jede Telefoneinheit (4-7) ein Anzeigefeld (6) zur Darstellung der Eingabe und/oder von Meldungen der Telefoneinheit, eine Eingabeeinichtung für Münzen, Geldscheine und/oder Karten zum Entgelten kostenpflichtiger Leistungen aufweist.

3. System nach Anspruch 2, dadurch gekennzeichnet, daß die Telefoneinheit (4-7;Fig,1) der Telefonstelle zur Herstellung einer Verbindung zu einem der automatischen Vermittlungsplätze beim Ansprechen der Schalteranordnung (8) eine fest eingespeicherte Nummer zur Vermittlungsstelle überträgt, die den der Nummer zugeordneten automatischen Vermittlungsplatz direkt ansteuert.

4. System nach nach einem oder mehreren der vorhergehenden Ansprüche 1 bis 3, dadurch gekennzeichnet, daß die Telefoneinheit unhd/ oder der automatische Vermittlungsplatz auch über Einrichtungen zur Stimmenidentifizierung verfügt, um für bestimmte Anwendungen von Funktionen die Identität und Berechtigung zur Benutzung dieser Funktionen durch den Teilnehemer in der Sprechstelle an Hand seiner Stimme festzustellen.

5. System nach einem oder mehreren der vorhergehenden Ansprüche, dadurch gekennzeichnet, daß die Telefoneinheit oder der automatische Vermittlungsplatz mittels seiner Spracherzeugungseinrichtung dem Fernsprechteilnehmer in der Telefonstelle alle für die Abwicklung der von ihm gewünschten Funktionen erforderlichen Informationen in Sprachform übermittelt.

6. System nach Anspruch 5, dadurch gekennzeichnet, daß die Spracherzeugungseinrichtung die Sprache mittels Sprachsynthese aus gespeicherten Vocoder-Signalen im Umfang des für den Betrieb erforderlichen Vokabulars erzeugt.

7. System nach Anspruch 5 dadurch gekennzeichnet, daß die Spracherzeugungseinrichtung das erforderliche Sprachvokabular mittels vorab gespeicherter analoger oder digitaler Sprachsignale erzeugt.

8. System nach einem oder mehreren der Ansprüche 2 bis 7, dadurch gekennzeichnet, daß sich die automatischen Vermittlungsplätze eine oder mehrere Einrichtungen zur Spracherkennung, -Steuerung und -Erzeugung unter sich teilen.

9. System nach einem oder mehreren der vorhergehenden Ansprüche, dadurch gekennzeichnet, daß die Einrichtung zur Spracherkennung die Spracheingaben des Fernsprechteilnehmers in der Telefonstelle erkennt, diese in Steuersignale umwandelt und diese an die Einrichtung zur sprachgesteuerten Ausführung der vom Teilnehmer gewünschten Funktionen überträgt.

10. System nach einem oder mehreren der vorhergehenden Ansprüche, dadurch gekennzeichnet, daß die ausführbaren Funktionen die Herstellung von Verbindungen zu anderen Teilnehmern, zu Datenbanken mit vielfältigen Informationen, die Entgelterfassung und ggf. die Übertragung von Bildinformation im Rahmen der Bildtelefonie umfassen.

11. System nach einem oder mehreren der vorhergehenden Ansprüche, dadurch gekennzeichnet, daß die Telefoneinheit in der Telefonstelle zwischen einer Wand derselben und einer Vorbauwand derart eingebaut ist, daß ihre Vorderfront mit der Vorbauwand bündig abschließt.

12. System nach einem oder mehreren der vorhergehenden Ansprüche, dadurch gekennzeichnet, daß die Telefoneinheit ein Tastenfeld (7) enthält.

13. System nach einem oder mehreren der vorhergehenden Ansprüche, dadurch gekennzeichnet, daß das Anzeigefeld (6) der Telefoneinheit hinter einer Panzerglasscheibe angebracht ist.

14. System nach einem oder mehreren der vorhergehenden Ansprüche, dadurch gekennzeichnet, daß für eine internationale Benutzung der automatischen Vermittlungsstelle diese mit einer Fremdsprachenidentifizierungseinrichtung versehen ist, die alle Benutzungsanweisungen an den Teilnehmer in der Telefonstelle in der Sprache des Telefonteilnehmers ausgibt und alle dessen Funktionswünsche in seiner Sprache entgegennimmt.

15. System nach Anspruch 15, dadurch gekennzeichnet, daß für eine Kommunikation zweier Teilehmer, die nicht die gleiche Sprache sprechen, in der Telefoneinheit oder der automatischen Vermittlungsstelle ein automatischer Sprachübersetzer vorgesehen ist, so daß jeder Teilnehmer mit dem anderen in seiner eigenen Sprache kommunizieren kann.

16. Öffentliche Telefonstelle für den Einsatz in einem öffentlichen Fernsprechsystem nach einem der Ansprüche 1 bis 15,
gekennzeichnet durch
- eine Telefoneinheit (4- 7;Fig.1), die über eine Freisprecheinrichtung (4,5;Fig.1) verfügt, sowie durch
- eine kontaktgesteuerte Schalteranordnung (8), die beim Betreten der Telefonstelle automatisch die Telefoneinheit aktiviert.

17. Verfahren zum Betrieb des Systems nach einem Ansprüche 1 bis 15,
gekennzeichnet durch folgende Verfahrensschritte:
1. Beim Betreten einer Telefonstelle durch einen Fernsprechteilnehmer wird eine Telefoneinheit aktiviert und eine Verbindung zu einer freien Vermittlungsstelle hergestellt;
2. das Menü aller ausführbaren Funktionen wird akustisch und/oder optisch ausgegeben;
3. der Teilnehmer wird aufgefordert, seinen Funktionswunsch mitzuteilen;
4. bei einer kostenpflichtigen Leistung wird der Teilnehmer aufgefordert, seine Identifikationsnummer mitzuteilen oder die gewünschte Zahlungsart anzugeben und im Falle der Zahlung mit Karte seine Karte in die Kartenaufnahme zu stecken sowie seine PIN einzugeben; im Falle der Barzahlung wird er aufgefordert, zulässige Münzen und/oder Geldscheine bereitzuhalten;
4a. bei einer nicht kostenpflichtigen Leistung werden die nachfolgenden Schritte 5, 5a, 5b und 6 übersprungen;
5. die Telefoneinheit oder der automatische Vermittlungsplatz prüft nun Karte und PIN des Teilnehmers;
5a. wenn die Karte und/oder PIN nicht korrekt sind, wird dies dem Teilnehmer mitgeteilt;
5b. stellt die Telefoneinheit oder der Vermittlungsplatz nach einer vorgegebenen Anzahl von Wiederholungen der Eingabe keine korrekte Eingabe fest, wird die Verbindung getrennt;
6. sind Karte und PIN korrekt oder ist Barzahlung gewählt, dann wird der Teilnehmer aufgefordert, die Rufnummer des gewünschten Teilnehmers oder Dienstes einzugeben;
7. kennt der Teilnehmer die Rufnummer, dann gibt er diese ein; kennt er die Rufnummer nicht, teilt er dies mit und wird dann aufgefordert, Namen und/oder die Bezeichnung des Dienstes (z.B. Kinoprogramm, Zeitansage) mitzuteilen;
7a. die Telefoneinheit oder der automatische Vermittlungsplatz sucht dann in geeigneten Datenbanken die Rufnummer, ermittelt den kostenpflichtigen Betrag, sagt diesen durch und/oder zeigt diesen im Anzeigefeld (6) an;
7b. im Falle der Barzahlung wird der Betrag angefordert und der Zahlungseingang geprüft; ist er nicht korrekt, wird dies dem Teilnehmer mitgeteilt und dieser aufgefordert ihn erneut einzugeben; geht keine gültige Zahlung ein, wird dem Teilnehmer mitgeteilt, daß die Verbindung getrennt wird;
8. nach Schritt 7a oder nach gültiger Barzahlung nach Schritt 7b wird die gewünschte Verbindung hergestellt;
9. im Falle der Barzahlung wird die anfallende Gebühr laufend ermittelt und dem Teilnehmer mitgeteilt, diese zu entrichten;
10. ist der entrichtete Betrag verbraucht, und es gehen keine weiteren Zahlungen mehr ein, dann wird, nach einer Mitteilung, die Verbindung getrennt;
11. ist das Gespräch beendet, dann teilt der Teilnehmer dies der Telefoneinheit oder dem automatischen Vermittlungsplatz mit, die die aufgelaufenen Gebühren durch Durchsage und/oder Anzeige im Anzeigefeld (6) angibt und im Falle der Zahlung mittels Karte die Abbuchung der aufgelaufenen Gebühr vornimmt;
12. die Verbindung zur Telefoneinheit oder dem automatischen Vermittlungsplatz wird durch die Schalteranordnung (8) getrennt, wenn der Teilnehmer die Telefonstelle wieder verläßt oder wenn eine vorgegebene Auszeit abgelaufen ist.

18. Verfahren nach Anspruch 17, gekennzeichnet durch folgende zusätzliche Verfahrensschritte:
1a. Der Teilnehmer wird von der Telefoneinheit, bzw. vom automatischen Vermittlungsplatz mehrsprachig aufgefordert, die Sprache anzugeben, in der er den folgenden Dialog zu führen wünscht;
1b. ist die gewünschte Sprache im Repertoire der automatischen Vermittlungsstelle vorhanden, dann wird diese Sprache verwendet;
1c. ist sie nicht vorhanden, dann wird der Teilnehmer aufgefordert, eine alternative Sprache anzugeben; wenn auch diese nicht vorhanden ist, wird der Dialog in einer vorbestimmten Sprache fortgesetzt.
